# EUROPEAN PATENT SPECIFICATION

(11) **EP 2 843 014 B1**
(45) Date of publication and mention of the grant of the patent: **23.08.2017**
(21) Application number: 14177496.8
(22) Date of filing: 17.07.2014
(51) Int. Cl.: C09D 11/101, C09D 11/322

(54) **Inkjet ink composition, image recording method, and image-recorded material**
Tintenstrahltintenzusammensetzung, Bildaufzeichnungsverfahren und Bildaufzeichnungsmaterial
Composition d'encre pour jet d'encre, procédé d'enregistrement d'images et matériau enregistré sur image

(30) Priority: 03.09.2013 JP 2013182130
(43) Date of publication of application: 04.03.2015
(73) Proprietor: FUJIFILM Corporation, Tokyo (JP)
(72) Inventor: Ohmoto, Makoto, Ashigarakami-gun, Kanagawa 258-8577 (JP)
(74) Representative: Klunker IP Patentanwälte PartG mbB

(56) References cited:
- EP-A1- 1 125 760
- EP-A1- 2 397 526
- EP-A2- 1 371 697
- EP-A2- 2 626 390
- WO-A1-2013/167389
- JP-A- 2006 248 064
- JP-A- 2007 161 887
- US-B1- 7 097 295

## Description

### BACKGROUND OF THE INVENTION

### Technical Field

The present invention relates to an inkjet ink composition, an image recording method and an image-recorded material.

### Related Art

Analog printing such as flexo printing has been conventionally employed for printing onto a non-absorbing or low-absorbing recording medium such as a glass, a metal or a plastic. However, digital printing by inkjet printing has been also performed in recent years, in view of advantages of small lot, various kinds, short delivery period and low cost.

As an inkjet ink composition (hereinafter, also simply referred to as an "ink") used for inkjet printing, that is, image recording by using an inkjet system, an aqueous ink that uses water as a solvent medium is attracting attention considering a global environment and a working environment, in addition to a solvent-based ink using a solvent as a solvent medium.

Followings are known as aqueous inks.

For example, an ink containing: polymer particles; wax particles, of which a ratio to a total amount of an ink being 0.5% by mass or more and less than 8% by mass; a colorant; and water is known as an ink with which an image having good texture such as touch feeling of an image and excellent scratch resistance is recorded (for example, refer to Japanese Patent Application Laid-Open (JP-A) No. 2013-82209).

An ink that contains a colorant, water, non-photocurable resin fine particles and a photocurable resin is known as an ink which has a high image density, is capable of providing an image which has excellent water resistance without bleeding and penetration on a recording paper, and has excellent jetting stability (for example, refer to Japanese Patent Application Laid-Open (JP-A) No. 2001-81365).

An ink which contains: water; a colorant; a water-soluble polymer thickener; and a water-soluble organic solvent(s), the total content of the water-soluble organic solvent(s) being 30 weight% or less with respect to the total amount of the ink, and the water-soluble organic solvent(s) containing a water-soluble organic solvent having a solubility parameter value of 27.5 or less at a content of 70 weight% or more with respect to the total content of the water-soluble organic solvents is known as an ink which can suppress occurrence of curling, has good storage stability, has good jetting stability of ink, and is capable of suppressing occurrence of image deformation (for example, refer to Japanese Patent Application Laid-Open (JP-A) No. 2010-65205).

An ink which contains a pigment, water and a water-soluble polymer compound, in which a hydrophilic main chain of the water-soluble polymer compound has plural side chains, and the water-soluble polymer compound being crosslinkable or polymerizable therebetween via the side chains by irradiation with an active energy ray is known as an ink which can record an image in which occurrence of white lines is suppressed and which has excellent sharpness by a printing system using an inkjet recording head of a line system (for example, refer to Japanese Patent Application Laid-Open (JP-A) No. 2009-91528).

An ink which contains a water-soluble organic desensitizer, a water-insoluble resin and water, in which a content of the water-soluble organic desensitizer is from 15% by mass to 45% by mass, and the water-soluble organic desensitizer is one or more selected from the group consisting of polyethylene glycol, triethylene glycol monobutyl ether, monoethanolamine, diethanolamine, triethanolamine and polypropylene glycol is known as an ink used for forming a desensitizer layer of a non-carbon copying paper by an inkjet recording system (for example, refer to Japanese Patent Application Laid-Open (JP-A) No. 2012-149235).

Further, an inkjet ink which contains: water; an active energy ray-reactive resin fine particles; and a polymer compound which has plural side chains on a hydrophilic main chain and is crosslinkable therebetween via the side chains by irradiation with an active energy ray is known as an ink which has printing adaptability onto various recording media, and with which an image that is excellent in color bleeding resistance, beading resistance and weatherability of an image, and exhibits excellent gloss can be obtained (for example, refer to Japanese Patent Application Laid-Open (JP-A) No. 2007-161887).

### SUMMARY OF THE INVENTION

A general inkjet ink composition (ink) is prepared, for example, so that a viscosity at 30°C becomes approximately several mPa·s.

However, in recent years, there are cases in which an ink with large droplets (for example, 10 pL or larger) can be jetted from an inkjet head that has large nozzle diameter is used to record an image in order to achieve a high speed printing (high speed image recording) by an inkjet system. In this case, a high-viscosity (specifically, the viscosity at 30°C is 10 mPa·s or more) ink is sometimes used from the viewpoint of performing a normal jetting of an ink.

There is a tendency that a higher degree of jetting stability of an ink is requested in high speed image recording using the high-viscosity ink.

The "jetting stability" mentioned here includes both the stability when an ink is continuously jetted from a head and the stability when an ink is intermittently jetted from a head.

On the other hand, an image recording method has been provided in which an image is recorded by using a photocurable ink that contains photocurable particles (such as "a photocurable resin" described in JP-ANo. 2001-81365, "an active energy ray-reactive resin fine particles" described in JP-A No. 2007-161887, or the like), a photocurable monomer, a photocurable oligomer, or the like and the image is cured by irradiating the recorded image with light (for example, an ultraviolet ray), in view of improving scuff resistance of an image (it is also called scratch resistance or abrasion resistance).

However, there are cases in which the image formed by this method becomes too hard. The image is unable to follow up bending and deforming of the recording medium. Therefore, there are cases in which the image is sometimes broken when the recording medium on which the image is recorded isbent and deformed. This breaking of the image is likely to particularly become a problem in cases in which a high-viscosity ink is jetted with large droplets to record the image onto a recording medium which is non-absorbing or low-absorbing and is capable of bending and deforming (for example, the thickness is thin to a certain degree).

There are cases in which it is requested to achieve not only improvement of scuff resistance of an image but also suppression of breaking of the image when deforming a recording medium on which the image is recorded, that is, both of scuff resistance of an image and flexibility of the image (follow-up performance with respect to deformation of a recording medium).

The present invention has been made in view of the above.

The present invention may provide an inkjet ink composition and an image recording method that have excellent jetting stability and can record an image that has excellent scuff resistance and flexibility.

In addition, the present invention may provide an image-recorded material that is obtained by the image recording method and is provided with an image that has excellent scuff resistance and flexibility.

An embodiment of the present invention is an inkjet ink composition including at least a water-soluble polymer that has a number average molecular weight of 1,000 or more, particles that have a polymerizable group, a colorant, and water, a ratio of a content of the particles to a content of the water-soluble polymer [the particles/the water-soluble polymer] in terms of mass being from 0.6 to 3.5, and a viscosity of the inkjet ink composition at 30°C being from 10 mPa·s to 14 mPa·s.

Another embodiment of the present invention is an image recording method including at least imparting the inkjet ink composition onto a recording medium by jetting, from an inkjet head, the inkjet ink composition at a droplet volume of from 10 pL to 120 pL.

Another embodiment of the present invention is an image-recorded material, including at least an image recorded, on a recording medium, by the image recording method.

### DETAILED DESCRIPTION OF THE INVENTION

Hereinbelow, a description will be given of specific embodiments according to the present invention, while the present invention is not limited to the specific embodiments, and may be appropriately changed to be implemented as long as the change does not depart from the spirit and scope of the present invention.

In the present specification, a numerical range indicated using "from ... to ..." or "... to ..." indicates a range including a numerical value given before "to" as a minimum value and a numerical value given after "to" as a maximum value.

In a case in which an amount of a component in a composition is indicated in the present disclosure, when there are plural substances corresponding to the component in the composition, the indicated amount means a total amount of the plural substances present in the composition, unless specifically stated otherwise.

The term "step" in the present disclosure encompasses an independent step, as well as a step that cannot be clearly distinguished from another step but yet achieves the expected effect of the step of interest.

### [Inkjet ink composition]

The present invention is defined in the appended claims. An inkjet ink composition of the present invention (hereinafter, also referred to as an "ink of the invention") includes a water-soluble polymer which comprises at least one selected from the group consisting of polyethylene glycol and a copolymer of ethylene glycol and propylene glycol that has a number average molecular weight, measured by gel permeation chromatography of 1,000 or more, particles that have a polymerizable group (hereinafter, also referred to as "polymerizable group-containing particles"), a colorant, and water, in which a ratio of a content of the polymerizable group-containing particles to a content of the water-soluble polymer [the polymerizable group-containing particles/the water-soluble polymer] in terms of mass is from 0.6 to 3.5 and a viscosity measured at a relative humidity of 50% using a vibration type viscometer and a cone plate (35 mm in diameter) of the inkjet ink composition at 30°C is from 10 mPa·s to 14 mPa·s.

As a result of intensive studies, the inventors found that it is possible to improve jetting stability of an ink and achieve both scuff resistance and flexibility of an image recorded by the ink(, which may be simply referred to as "the image" hereinafter,) by setting a viscosity of the ink to the range described above and setting a ratio of a mass of polymerizable group-containing particles to a mass of the water-soluble polymer in the ink [the polymerizable group-containing particles/the water-soluble polymer] to the range described above, and have reached the completion of the invention.

According to the ink of the invention, it may be possible to improve jetting stability of the ink and record an image that has excellent scuff resistance and flexibility.

The effect of jetting stability may be particularly and effectively realized in an image recording method in which droplet of the ink of the invention is jetted from an inkjet head, in which the droplet respectively have a volume of from 10 pL to 120 pL, which is a relatively large droplet volume. Description will be given of the image recording method below.

The viscosity of the ink of the invention at 30°C is from 10 mPa·s to 14 mPa·s, which is high as compared to conventional inks, which have a viscosity of approximately several mPa·s at 30°C.

In a case where the ink is jetted from an inkjet head which has a large nozzle diameter and is capable of jetting the ink with large droplets (for example, 10 pL or larger) to record an image, when the viscosity is less than 10 mPa·s, jetting stability of the ink may deteriorate. For example, the ink may be overflowed from the nozzle and stuck onto the nozzle surface (the jet surface), and as a result thereof, there may be a case in which misfiring of the ink occurs. The misfiring may tend to more easily occur in a case where the jet surface of the head (the nozzle surface) includes at least one selected from the group consisting of a metal and silicon. On the other hand, jetting stability of the ink may also deteriorate when the viscosity exceeds 14 mPa·s.

The viscosity is more preferably from 11 mPa·s to 13 mPa·s.

The viscosity of the ink of the invention indicates a viscosity of the ink at a liquid temperature of 30°C, measured under an environment of a temperature of 30°C and a relative humidity of 50% by using a vibration type viscometer (manufactured by BROOKFIELD ENGINEERING, trade name: DV-II+VISCOMETER) and a cone plate (35 mm in diameter).

The viscosity of the ink of the invention can be adjusted mainly according to a kind and the content of the water-soluble polymer and the content ratio of [the polymerizable group-containing particles/the water-soluble polymer].

The ink of the invention includes the water-soluble polymer and the polymerizable group-containing particles. The ratio of a content of the particles to a content of the water-soluble polymer in terms of mass (a content ratio of [the polymerizable group-containing particles/the water-soluble polymer]) is from 0.6 to 3.5.

When the content ratio is in the range described above, it may be possible to achieve both of scuff resistance of the image and flexibility of the image.

When the content ratio is less than 0.6, scuff resistance of the image may deteriorate.

On the other hand, when the content ratio exceeds 3.5, flexibility of the image may deteriorate.

The content ratio is preferably from 0.6 to 3.0.

Hereinafter, description will be given of each component of then ink of the invention.

### <Water-soluble polymer>

The ink of the invention includes at least one water-soluble polymer which comprises at least one selected from the group consisting of polyethylene glycol and a copolymer of ethylene glycol and propylene glycol which has a number average molecular weight (Mn) of 1,000 or more.

In the invention, the "water-soluble polymer" indicates a polymer compound which has a solubility that one gram or more of which can dissolve to 100 g of water at 25°C.

In the invention, the water-soluble polymer that has a number average molecular weight of 1,000 or more is a component that contributes to an increase in viscosity of the ink and also a compound that contributes to an improvement of flexibility of the image (that is, a component that functions as a plasticizer of the image). Further, the water-soluble polymer that has a number average molecular weight of 1,000 or more is also a component that contributes to an improvement of scuff resistance of the image in that the number average molecular weight is 1,000 or more.

When the number average molecular weight of the water-soluble polymer is less than 1,000, stickiness of the image may occur, and thus scuff resistance of the image may deteriorate. In addition, a large amount of content may be required for obtaining a desired viscosity of the ink, and thus there may be a concern that the storage stability of the ink deteriorates.

The number average molecular weight of the water-soluble polymer is 1,000 or more, while it is preferably 2,000 or more, more preferably 4,000 or more, further preferably 6,000 or more, and particularly preferably 8,000 or more.

The upper limit of the number average molecular weight of the water-soluble polymer is not particularly limited, while the upper limit of the number average molecular weight of the water-soluble polymer is preferably 200,000 or less, more preferably 100,000 or less, and particularly preferably 20,000 or less, from the viewpoint of jetting stability of the ink.

The number average molecular weight (Mn) of the water-soluble polymer in the invention indicates a value that is measured by using a gel permeation chromatography (GPC). The measurement of Mn is performed by using HLC-8020 GPC (trade name, manufactured by TOSHO CORPORATION) as a GPC apparatus, TSKgel Super HZM-H, TSKgel Super HZ4000 and TSKgel Super HZ200 (trade names, manufactured by TOSHO CORPORATION, 4.6 mm ID×15 cm) as columns, and THF (tetrahydrofuran) as an eluent, with a preset temperature of a column oven of 40°C. Standard polystyrene is used for calculating the number average molecular weight.

The water-soluble polymer is preferably a compound that is solid in a standard state (25°C, 1 atmosphere pressure) from the viewpoint of further improving both flexibility of the image and scuff resistance of the image.

Examples of water-soluble polymers not falling under the scope of the present invention include a vinyl polymer, a polyether polymer, a polysaccharide polymer, an acrylic polymer, a pyrrolidone polymer, and a cellulose polymer. Preferable examples thereof include a polyether polymer and a pyrrolidone polymer, and particularly preferable examples thereof include a polyether polymer.

Specific examples of water-soluble polymers not falling under the scope of the present invention include gelatins, polyvinyl alcohols, various kinds of modified polyvinyl alcohols, polyvinyl pyrrolidones, vinyl formals and a derivative thereof, polyalkylene glycols, polyacrylamide, polydimethylacrylamide, polydimethylaminoacrylate, sodium polyacrylate, a salt of a copolymer of acrylic acid and methacrylic acid, sodium polymethacrylate, a polymer that includes an acrylic group in a salt of a copolymer of acrylic acid and vinyl alcohol, a natural polymer or a derivative thereof such as a starch, an oxidized starch, a carboxy starch, a dialdehyde starch, dextrin, sodium alginate, gum arabic, casein, pullulan, dextran, or cellulose or a derivative thereof (such as methyl cellulose, ethyl cellulose, carboxymethyl cellulose, or hydroxypropyl cellulose), and a synthetic polymer such as polypropylene glycol, polyvinyl ether, polyglycerin, a maleic acid alkyl vinyl ether copolymer, a maleic acid N-vinyl pyrrole copolymer, a styrene maleic anhydride copolymer, or polyethylene imine.

According to the present invention polyethylene glycol, and a copolymer of ethylene glycol and propylene glycol are used from the viewpoint of further improving flexibility of the image.

The copolymer of ethylene glycol and propylene glycol may be a random copolymer or a block copolymer, while a block copolymer is preferable.

Hereinafter, a block copolymer of ethylene glycol and propylene glycol may be also referred to as a "polyethylene glycol/polypropylene glycol copolymer".

In the copolymer of ethylene glycol and propylene glycol (, which is preferably the polyethylene glycol/polypropylene glycol copolymer), a ratio of a mole of a structural unit derived from ethylene glycol to a mole of a structural unit derived from propylene glycol (hereinafter, also referred to as the "molar ratio [PEG/PPG]") is preferably 3.0 or more, more preferably 4.0 or more, and particularly preferably 5.0 or more, from the viewpoint of the jetting property of the ink.

An upper limit of the molar ratio [PEG/PPG] is not particularly limited, while the molar ratio [PEG/PPG] can be set to, for example, 8.0 or less, and is preferably 7.0 or less.

Hereinafter, specific examples of the water-soluble polymer that is preferably used in the invention is exemplified; however, the invention is not limited to the specific examples.
- Polyethylene glycol (number average molecular weight (Mn): 2,000, 4,000, 8,000, 20,000, 50,000 or 100,000)
- NEWPOL PE-68 (trade name, manufactured by Sanyo Chemical Industries, Ltd., polyoxyethylene glycol/polyoxypropylene glycol copolymer, Mn: 8,800, molar ratio [PEG/PPG]=160/30)
- NEWPOL PE-78 (trade name, manufactured by Sanyo Chemical Industries, Ltd., polyoxyethylene glycol/polyoxypropylene glycol copolymer, Mn: 3,400, molar ratio [PEG/PPG]=150/35)
- NEWPOL PE-108 (trade name, manufactured by Sanyo Chemical Industries, Ltd., polyoxyethylene glycol/polyoxypropylene glycol copolymer, Mn: 16,500, molar ratio [PEG/PPG]=300/55)
- NEWPOL PE-128 (trade name, manufactured by Sanyo Chemical Industries, Ltd., polyoxyethylene glycol/polyoxypropylene glycol copolymer, Mn: 25,000, molar ratio [PEG/PPG]=455/86)

The ink of the invention may include only one kind of the water-soluble polymer or may include two or more kinds thereof.

The content of the water-soluble polymer in the ink of the invention can be appropriately adjusted in order that the viscosity of the ink and the content ratio [the polymerizable group-containing particles/the water-soluble polymer] are in the ranges described above. In embodiments, the content of the water-soluble polymer is preferably from 1% by mass to 16% by mass, more preferably from 1% by mass to 14% by mass, further preferably from 2% by mass to 12% by mass, and particularly preferably from 3% by mass to 9% by mass, with respect to a total amount of the ink.

### <Particles that has polymerizable group>

The ink of the invention includes at least one kind of particles that have a polymerizable group.

In the invention, the polymerizable group-containing particles mainly contribute to an improvement in scuff resistance of the image.

The polymerizable group-containing particles can be polymerized by the polymerizable group and cured by irradiation with light (for example, an ultraviolet ray).

The polymerizable group-containing particles exist as particles in the ink of the invention that includes water. Therefore, the polymerizable group-containing particles are preferably water-insoluble particles.

Here, "water-insoluble" particles indicates particles which is dissolved in 100 g of water at 25°C at an amount of dissolution of 10 g or less when the particles are dissolved in the water after being subjected to drying at 105°C for 2 hours. The amount of dissolution is preferably 5 g or less, and further preferably 1 g or less.

Examples of the polymerizable group include a group that has an ethylenic double bond, and an epoxy group, and a group that has an ethylenic double bond is preferable.

As the group that has an ethylenic double bond, a (meth)acryloyl group, a vinyl group and an allyl group are preferable, and a (meth)acryloyl group is more preferable.

Here, a (meth)acryloyl group means at least one of an acryloyl group and a methacryloyl group.

The polymerizable group-containing particles are preferably particles of a polymer that has a polymerizable group, and are more preferably particles of polyurethane that has a polymerizable group.

Hereinafter, the polyurethane that has a polymerizable group may be also referred to as "specific polyurethane" and the particles of polyurethane that has a polymerizable group may be also referred to as "specific polyurethane particles".

As the specific polyurethane particles, particles of polyurethane that has an ethylenic double bond, that is, particles of polyurethane that has a group that includes an ethylenic double bond (preferably, a (meth)acryloyl group) as a polymerizable group are particularly preferable.

As the polyurethane that has an ethylenic double bond (specific polyurethane), a urethane (meth)acrylate resin is particularly preferable.

Here, "(meth)acrylate" means at least one of acrylate and methacrylate.

A polyurethane skeleton in the specific polyurethane is synthesized by a polyaddition reaction using a diol compound and a diisocyanate compound as a raw material. As to the details for a diol compound and a diisocyanate compound, description in paragraphs of [0031] to [0036] in JP-A No. 2001-247787 can be referred.
the specific polyurethane can be synthesized by, for example, copolymerizing a diol compound that has a (meth)acryloyl group, in addition to an isocyanate compound and a diol compound used in a usual synthesis of polyurethane. In addition, it is also preferable that a diol compound that has a carbonyl group be appropriately copolymerized.

The specific polyurethane particles can be produced by making synthesized specific polyurethane into the form of particles by a known phase inversion emulsification method or the like. In embodiments, a polymerization initiator may be introduced into the specific polyurethane particles by adding a polymerization initiator (preferably, photopolymerization initiator) to synthesized specific polyurethane and making particles therefrom.

It is assumed that the specific polyurethane is preferable due to the following point.

A polyurethane skeleton of the specific polyurethane is formed by an urethane part like a hydrogen bond, the urethane part being capable of strongly interacting between polymers, and an non-urethane part that provides a relatively weak interaction between polymers. When a film of the ink (an image) is formed, the part which provides relatively strong interaction and the part which provides relatively weak interaction respectively gather to form a micro structure constructing a sea-island structure. It is assumed that flexibility is imparted to the image owing to the construction of the sea-island structure.

Further, the specific polyurethane is cured by polymerization with a polymerizable group when the recorded image is irradiated with light. Scuff resistance may be imparted to the image thereby.

The polyurethane skeleton of the specific polyurethane preferably has a structure represented by the following Formula (PU-1).

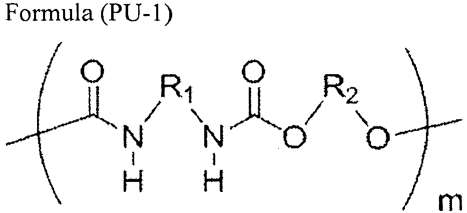

In Formula (PU-1), R₁ represents an aliphatic group or an aromatic group, and R₂ represents a residue of a diol compound.

Examples of the aliphatic group represented by R₁ include a divalent group derived from isophorone diisocyanate (IPDI), hydrogenated m-xylene diisocyanate (H6XDI), hydrogenated diphenylmethane diisocyanate (H12MDI), and hexamethylene diisocyanate (HDI).

Examples of the aromatic group represented by R₁ include a divalent group derived from m-xylene diisocyanate (XDI), tolylene diisocyanate (TDI), and diphenylmethane diisocyanate (MDI).

R¹ is preferably an aliphatic group, from the viewpoint of scuff resistance of the image. This is because it is assumed that scuff resistance of the image is improved since flexibility of an ink film formed after the ink is fixed on the recording medium is improved by selecting a relatively soft structure.

R² represents a residue of a diol compound, and the residue is preferably a group selected from an alkylene group, a polyether group, a polyester group, a polycarbonate group and a polycaprolactone group, more preferably a group selected from an alkylene group, a polyether group, a polyester group and a polycaprolactone group, and particularly preferably a group selected from an alkylene group that has 1 to 30 carbon atoms, an alkyl ether group that has 2 to 60 carbon atoms and an alkyl ester group that has 1 to 30 carbon atoms. This is because it is assumed that that scuff resistance of the image is improved since flexibility of an ink film formed after the ink is fixed on the recording medium is improved by selecting a relatively soft structure.

m in Formula (PU-1) represents an integer and may be appropriately selected in a range that satisfies a molecular weight condition described below.

The polyurethane skeleton in the specific polyurethane is preferably a polyurethane structure formed by diisocyanate and diol from the viewpoint of scuff resistance, and is more preferably a polyurethane structure formed by diisocyanate and polycarbonate diol in consideration of the storage stability and jetting stability of the ink.

The specific polyurethane may be either one that has internally a crosslinked structure or one that does not have a crosslinked structure. In embodiments, one that does not have a crosslinked structure may be more preferable from the viewpoint of the fixing property of the image.

As the specific polyurethane particles, commercial products may be used.

Examples of the commercial products include ACRIT WBR-829, ACRIT WBR-829D and ACRIT WBR-839 manufactured by Taisei Fine Chemical Co., Ltd. (all are an emulsion of an urethane(meth)acrylate resin that has an ethylenic double bond) and the like as an emulsion of the specific polyurethane particles (dispersion liquid).

In embodiments, the polymerizable group-containing particles may be formed of a polymer which is different from the specific polyurethane, such as a (meth)acrylic resin that has a polymerizable group, a styrene resin that has a polymerizable group, and/or the like.

Here, "(meth)acrylic" indicates at least one of "acrylic" and "methacrylic".

Preferable examples of the (meth)acrylic resin include one that has an anionic group. Such a (meth)acrylic resin can be obtained by, for example, polymerizing a (meth)acrylic monomer that has an anionic group (an anionic group-containing (meth)acrylic monomer) in a solvent medium. In embodiments, a monomer which is different from the anionic group-containing (meth)acrylic monomer and is capable of being copolymerized with the anionic group-containing (meth)acrylic monomer may be polymerized with the anionic group-containing (meth)acrylic monomer as necessary. Examples of the anionic group-containing (meth)acrylic monomer include a (meth)acrylic monomer that has one or more groups selected from a carboxy group, a sulfonic acid group and a phosphonic group, and among those, a (meth)acrylic monomer that has a carboxy group (such as acrylic acid, methacrylic acid, crotonic acid, ethacrylic acid, propylacrylic acid, isopropylacrylic acid, itaconic acid, fumaric acid or the like) is preferable, and acrylic acid and methacrylic acid are particularly preferable.

Examples of the styrene resin include a copolymer of styrene with other monomer such as an acrylic monomer, as well as a styrene homopolymer. Examples of the acrylic monomer include an anionic group-containing acrylic monomer which is similar to that used in the acrylic resin described above.

The polymer that can be included in the polymerizable group-containing particles preferably has a weight average molecular weight of from 3,000 to 300,000, which is more preferably from 5,000 to 200,000.

The weight average molecular weight is a value that measured as a value calculated in term of polystyrene using a gel permeation chromatography (GPC). The measurement conditions are as follows.

### <Conditions>

- GPC: HLC-8220 GPC (trade name, manufactured by TOSHO CORPORATION)
- Column: TSKgel Super HZM-H, TSKgel Super HZ4000 and TSKgel Super HZ2000 (all are trade names, manufactured by TOSHO CORPORATION)
- Mobile phase solvent medium: Tetrahydrofuran
- Standard sample: Standard polystyrene
- Flow rate: 0.35 ml/min
- Column temperature: 40°C

The polymerizable group-containing particles in the invention are preferably particles of a self-dispersing polymer that has the self-dispersing property (preferably, a self-dispersing polymer that is the specific polyurethane).

As to the self-dispersing polymer, description of paragraphs of 0066 to 0108 in JP-A No. 2013-82209 can be appropriately referred.

An average particle diameter of the polymerizable group-containing particles is preferably in a range from 10 nm to 400 nm, more preferably in a range from 10 nm to 200 nm, further preferably in a range from 10 nm to 100 nm, particularly preferably in a range from 10 nm to 50 nm, as a volume average particle diameter. When the average particle diameter is 10 nm or more, the manufacturing aptitude may be improved. When the average particle diameter is 400 nm or less, the storage stability may be improved. There is no particular limitation to the particle size distribution of the polymerizable group-containing particles. The particle may have either a wide particle size distribution or a particle size distribution of monodisperse. In embodiments, a mixture of two or more kinds of water-insoluble particles may be used.

The average particle diameter and the particle size distribution of the polymerizable group-containing particles are determined by measuring a volume average particle diameter by a dynamic light scattering method using the Nanotrac particle size distribution measuring apparatus (manufactured by NIKKISO CO., LTD., trade name: UPA-EX150).

In a case where the polymerizable group-containing particles contain a polymer (for example, the specific polyurethane), the polymerizable group-containing particles may further contain an additional component such as a polymerization initiator.

As the polymerization initiator, a photopolymerization initiator is preferable, and a radical photopolymerization initiator is more preferable. Examples of a commercial product of a radical photopolymerization initiator include IRGACURE® series, DAROCUR® series, and LUCIRIN® series manufactured by BASF Japan Ltd..

In a case where the polymerizable group-containing particles contain the polymerization initiator, a content of the polymerization initiator is preferably from 0.1% by mass to 20% by mass, more preferably from 1% by mass to 15% by mass, and particularly preferably from 1% by mass to 10% by mass, with respect to the total amount of the polymerizable group-containing particles.

In addition, a content of the polymer (for example, the specific polyurethane) in the polymerizable group-containing particles is preferably 80% by mass or more, and particularly preferably 90% by mass or more, with respect to the total amount of the polymerizable group-containing particles.

An upper limit of the content of the polymer is not particularly limited. In a case where the polymerizable group-containing particles includes the polymerization initiator, the content of the polymer may be preferably 99.9 % by mass or less, and more preferably 99% by mass or less, with respect to the total amount of the polymerizable group-containing particles.

The ink of the invention may include only one kind of polymerizable group-containing particles or may include two or more kinds thereof.

A content of the polymerizable group-containing particles in the ink of the invention can be appropriately adjusted in order that the viscosity of the ink and the content ratio [the particles/the water-soluble polymer] are in the ranges described above. For example, the content of the polymerizable group-containing particles can be set to a range of from 1% by mass to 30% by mass, preferably from 2% by mass to 15% by mass, and more preferably from 3% by mass to 10% by mass, with respect to the total amount of the ink.

### <Surfactant>

The ink of the invention can contain at least one kind of surfactant.

In doing so, it is possible to more effectively adjust the surface tension of the ink.

The surfactant is not particularly limited, and it is possible to use by appropriately selecting from conventionally-known surfactants.

As the surfactant, an acetylene glycol surfactant is preferable.

The acetylene glycol surfactant may easily, properly maintain the surface tension and the interfacial tension between the ink and the inkjet head member which comes into contact with the ink (the head nozzle or the like), and may hardly cause frothing, compared to other surfactants. For this reason, jetting stability of the ink may be enhanced by incorporating the acetylene glycol surfactant into the ink. In addition, by including the acetylene glycol surfactant in the ink, the wettability and the permeability of the ink with respect to the recording medium may become excellent, and uneven density or bleeding of the ink may be suppressed. Therefore, it is advantageous to form a precise image.

Examples of the acetylene glycol surfactant include SURFYNOL 104, SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 104S, SURFYNOL 420, SURFYNOL 440, SURFYNOL 465, SURFYNOL 485, SURFYNOL 2520, SURFYNOL SE, SURFYNOL SE-F, SURFYNOL 504, SURFYNOL 61, SURFYNOL DF37, SURFYNOL DF110D, SURFYNOL CT111, SURFYNOL CT121, SURFYNOL CT131, SURFYNOL CT136, SURFYNOL TG and SURFYNOL GA (hereinbefore, all are trade names, manufactured by Air Products and Chemicals. Inc.), OLFINE B, OLFINE Y, OLFINE P, OLFINE A, OLFINE STG, OLFINE SPC, OLFINE E1004, OLFINE E1006, OLFINE E1008, OLFINE E1010, OLFINE PD-001, OLFINE PD-002W, OLFINE PD-003, OLFINE PD-004, OLFINE EXP. 4001, OLFINE EXP. 4036, OLFINE EXP. 4051, OLFINE AF-103, OLFINE AF-104, OLFINE AK-02, OLFINE SK-14 and OLFINE AE-3 (hereinbefore, all are trade names, manufactured by Nissin Chemical Co., Ltd.), ACETYLENOL E00, ACETYLENOL E00P, ACETYLENOL E40, ACETYLENOL E100 (hereinbefore, all are trade names, manufactured by Kawaken Fine Chemicals Co., Ltd.), and the like.

The surfactant is preferably one that has a Hydrophile-Lipophile Balance (HLB) of from 3 to 12 from the viewpoint of jetting stability.

When the HLB of the surfactant is 12 or less, it is possible to more effectively suppress bubbling of ink and involving of air, and thus it is possible to more improve jetting stability.

The HLB of the surfactant is more preferably from 3 to 10, and particularly preferably from 3 to 8.

In addition, the surfactant is preferably one that has a number average molecular weight of less than 1,000.

As the surfactant having the HLB of from 3 to 12, commercial products may be used.

Examples of the commercial product include OLFINE E1008 (molecular weight: 578.78, HLB: 10 to 12), OLFINE E1006 (molecular weight: 490.67, HLB: 9 to 10), SURFYNOL 2520 (molecular weight: 562.78, HLB: 8), SURFYNOL 440 (molecular weight: 380.54, HLB: 8), SURFYNOL SE-F (molecular weight: unknown, HLB: 6), SURFYNOL 420 (molecular weight: 270.41, HLB: 4), SURFYNOL 104PG-50 (molecular weight: 226.36, HLB: 4), SURFYNOL DF110D (molecular weight: unknown, HLB: 3), and the like.

Among those, SURFYNOL 2520, SURFYNOL 440, SURFYNOL SE-F, SURFYNOL 420, SURFYNOL 104PG-50 and SURFYNOL DF110D are preferable, and SURFYNOL SE-F, SURFYNOL 420, SURFYNOL 104PG-50 and SURFYNOL DF110D are particularly preferable.

Although any of the commercial products described above are not disclosed with respect to molecular weights thereof, it is clear from the physical property thereof that none of them is a compound that has the molecular weight of 1,000 or more.

The number average molecular weight of the "surfactant" can be calculated with figures in a case where the structure is clearly known, and it is also possible to be measured by using a gel permeation chromatography (GPC). For the GPC, an HLC-8020GPC (trade name, manufactured by TOSHO CORPORATION) is used, and the measurement is performed by using TSKgel Super HZM-H, TSKgel Super HZ4000 and TSKgel Super HZ200 (trade name, manufactured by TOSHO CORPORATION, 4.6 mm ID×15 cm) as a column and tetrahydrofuran (THF) as an eluent and setting the preset temperature of a column oven to 40°C. For the calculation of the molecular weight, the standard polystyrene is used.

In the case where the ink of the invention contains the surfactant, the surfactant that is contained may be only one kind or may be two or more kinds thereof,

In the case where the ink of the invention contains the surfactant, a content thereof can be appropriately selected in consideration of the surface tension of the ink. In embodiments, the content is preferably from 0.1% by mass to 2% by mass, more preferably from 0.1% by mass to 1.5% by mass, and particularly preferably from 0.2% by mass to 1% by mass. with respect to a total amount of the ink

### <Colorant>

The ink of the invention includes at least one kind of colorant.

As the colorant, a pigment, a dye, and the like are preferable, and among those, a pigment is preferable from the viewpoint of the light-fastness of the image. The pigment is not particularly limited, and can be appropriately selected in accordance with the purpose. For example, the pigment may be either an organic pigment or an inorganic pigment. The pigment is preferably almost insoluble or poorly-soluble in water from the viewpoint of the colouring property of the ink.

Examples of the organic pigment include a polycyclic pigment such as azo lake, an azo pigment, a phthalocyanine pigment, a perylene pigment, a perynone pigment, an anthraquinone pigment, a quinacridone pigment, a dioxazine pigment, a diketopyrrolopyrrole pigment, a thioindigo pigment, an isoindolinone pigment or a quinophthalone pigment; dye lake such as basic dye lake or acidic dye lake; a nitro pigment, a nitroso pigment, aniline black, and a daylight fluorescent pigment.

Examples of the inorganic pigment include titanium oxide, an iron oxide pigment, and a carbon black pigment.

Even a pigment which is not described in a color index can be used in the ink of the invention as long as the pigment is capable of being dispersed in an aqueous phase. A pigment which is subjected to surface treatment with a surfactant, a polymeric dispersant or the like, graft carbon, and the like are usable.

Among the pigments described above, an azo pigment, a phthalocyanine pigment, an anthraquinone pigment, a quinacridone pigment and a carbon black pigment may be particularly preferably used in the ink of the invention,.

The ink of the invention may contain a water-dispersing pigment as a colorant.

Specific examples of the water-dispersing pigment includes the pigments (1) to (4) described below.
(1) Encapsulated pigment: A dispersion of a polymer that is formed by incorporating a pigment into polymer particles, and in more detail, one that is made to be dispersible in water by coating a pigment with a hydrophilic, water-insoluble resin to make the pigment being hydrophilic at a resin layer on a surface of the pigment.
(2) Self-dispersing pigment: A pigment that has at least one kind of hydrophilic group on its surface and exhibits at least either water-dispersing property or water-solubility in the absence of a dispersant, and in more detail, one that is prepared by subjecting a pigment such as carbon black to a surface oxidation treatment to hydrophilize the pigment to be dispersed in water by itself.
(3) Resin-dispersed pigment: A pigment that is dispersed by a water-soluble polymer compound that has the weight average molecular weight of 50,000 or less.
(4) Surfactant-dispersed pigment: A pigment that is dispersed by a surfactant.

The encapsulated pigment can be manufactured by methods described in each patent application publication of, for example, JP-A No. H09-151342, JP-A No. H10-140065, JP-A No. H11-209672, JP-ANo. H11-172180, JP-ANo. H10-25440 or JP-ANo. H11-43636.

The self-dispersing pigment is also one of the preferable examples. The self-dispersing pigment is a pigment which has a number of hydrophilic functional groups and/or salts thereof (hereinafter, referred to as a "dispersing-imparting group") being bonded onto the pigment surface directly or indirectly through an alkyl group, an alkyl ether group, an aryl group or the like, and is a pigment capable of being dispersed in an aqueous medium without using a dispersant for dispersing the pigment. Here, "dispersed in an aqueous medium without using a dispersant" means that the pigment is capable of being dispersed in the aqueous medium even a dispersant for dispersing the pigment is not used.

Examples of the self-dispersing pigment include commercial products, and specific examples thereof include MICRO JET CW-1 (trade name; manufactured by Orient Chemical Industries Co., Ltd.), CAB-O-JET200 and CAB-O-JET300 (trade name; manufactured by Cabot Corporation).

### -Dispersant-

In the ink of the invention, in a case where the pigment is used as a colorant, a dispersant may be used.

Examples of the dispersant include a polymer dispersant and a low molecular surfactant dispersant. Any of these may be used in the ink of the invention.

As the polymer dispersant, either water-soluble or water-insoluble dispersant may be used.

Herein, the "water-insoluble" means a property that an amount of a dispersant dissolved in 100 g of water at 25°C is 10 g or less, when the dispersant is dried at 105°C for 2 hours and then subjected to the dissolution.

As to the low molecular surfactant dispersant, description in paragraphs of 0044 to 0048 in JP-A No. 2013-82209 can be referred.

Among the polymer dispersants, examples of the water-soluble dispersant include a hydrophilic polymer compound.

Among the polymer dispersants, a polymer compound that contains a carboxy group is preferable from the viewpoint of the dispersion stability of the pigment. Preferable examples thereof include a polymer compound that contains a carboxy group, and particularly preferable examples thereof include an acrylic resin such as a water-soluble styrene acrylic resin, a water-soluble styrene maleic acid resin, a water-soluble vinylnaphthalene acrylic resin and a water-soluble vinylnaphthalene maleic acid resin.

A weight average molecular weight of the polymer dispersant is preferably in a range from 3,000 to 200,000, more preferably in a range from 5,000 to 100,000, further preferably in a range from 5,000 to 80,000, and particularly preferably in a range from 10,000 to 60,000.

The polymer dispersant preferably includes a polymer that has a carboxy group from the viewpoint of the self-dispersibility. In embodiments, the polymer dispersant is preferably a polymer which has a carboxy group and which has the acid value of 100 mg KOH/g or less, and more preferably a polymer which has a carboxy group and which has the acid value of from 25 mg KOH/g to 100 mg KOH/g.

The mixing mass ratio of the pigment and the dispersant (pigment:dispersant) is preferably in a range from 1:0.06 to 1:3, more preferably in a range from 1:0.125 to 1:2, and further preferably in a range from 1:0.125 to 1:1.5.

In the ink of the invention, a resin-coated pigment is more preferably used. The resin-coated pigment is a pigment at least a part of a surface of which being coated with a crosslinked polymer in which a water-soluble resin is crosslinked by a crosslinking agent. The water-soluble resin acts as a dispersant that disperses the pigment. When the pigment is coated with the crosslinked polymer, a dispersion of the pigment or an aqueous ink using the pigment dispersion may be imparted with excellent stability (the stability with respect to pH fluctuations and the stability with respect to the temperature fluctuations). Examples of the water-soluble resin include polyvinyls, polyurethanes, and polyesters, and among those, polyvinyls are preferable.

The water-soluble resin described here has, in a molecule thereof, a group which can perform a crosslinking reaction by the crosslinking agent. Such a group is not particularly limited, and examples thereof include a carboxy group, a salt of a carboxy group, an isocyanate group, and an epoxy group. In the ink of the invention, the water-soluble resin preferably has a carboxy group or a salt thereof from the viewpoint of an improvement of the dispersibility.

The water-soluble resin is preferably a copolymer that is obtained using, as a copolymerization component thereof, a carboxy group-containing monomer.

An acid value of the water-soluble resin (the number of mg of KOH that is required for neutralizing 1 g of the water-soluble resin) is preferably from 135 mg KOH/g to 250 mg KOH/g, more preferably from 135 mg KOH/g to 200 mg KOH/g, and particularly preferably from 135 mg KOH/g to 180 mg KOH/g, from the viewpoints of the dispersibility and the dispersion stability of the pigment.

An amount of the water-soluble resin is preferably from 10% by mass to 250% by mass, more preferably from 10% by mass to 200% by mass, further preferably from 20% by mass to 150% by mass, and particularly preferably from 30% by mass to 100% by mass, with respect to an amount of the pigment.

The resin-coated pigment, in which the surface of the pigment is coated with the crosslinked polymer in which the water-soluble resin is crosslinked by the crosslinking agent, can be obtained through a step of crosslinking the water-soluble resin by the crosslinking agent after dispersing the pigment using the water-soluble resin.

As the pigment that is coated with the crosslinked polymer in which the water-soluble resin is crosslinked by the crosslinking agent, specifically, PROJET YELLOW APD1000, PROJET MAGENTA APD1000, PROJET CYAN APD1000 and PROJET BLACK APD1000 (all are trade names, manufactured by FUJIFILM Imaging Colorants Ltd.), and the like are preferably used.

In the ink of the invention, a dye may be used as the colorant instead of the pigment. In a case where the dye is used, the dye may be one that is held on a water-insoluble carrier. Conventionally-known dyes can be used as the dye without limitation, and for example, the dyes described in JP-A No. 2001-115066, JP-A No. 2001-335714, JP-A No. 2002-249677 and the like are preferably used. As the carrier, there is no particular limitation as long as the carrier is insoluble or poorly-soluble in water, and any one selected from an inorganic material, an organic material or a composite material thereof may be used. Specifically, the carriers described in JP-ANo. 2001-181549, JP-ANo. 2007-169418, and the like are preferably used.

The carrier that holds the dye (water-insoluble coloring particles) can be used as an aqueous dispersion by using a dispersant. The dispersant for the pigment described above can be also preferably used as the dispersant for the dye.

From the viewpoint of scuff resistance of the image, the quality of the image and the like, the colorant included in the ink of the invention is preferably a colorant which includes a pigment and a dispersant, more preferably a water-dispersing pigment which contains an organic pigment and a polymer dispersant and in which at least a part of the surface of the organic pigment is coated with the polymer dispersant, and particularly preferably a water-dispersing pigment which includes an organic pigment and a polymer dispersant, in which the polymer dispersant includes a carboxy group and in which at least a part of the surface of the organic pigment is coated with the polymer dispersant having a carboxy group.

An average particle diameter of the pigment in a dispersion state is preferably from 10 nm to 200 nm, more preferably from 10 nm to 150 nm, and further preferably from 10 nm to 100 nm. When the average particle diameter is 200 nm or less, the color reproductivity may become excellent and the dropping characteristics also become excellent when dropping. When the average particle diameter is 10 nm or more, the light-fastness may become excellent. A particle size distribution of the colorant is not particularly limited. The colorant may have either a wide particle size distribution or a particle size distribution of monodisperse. In embodiments, a mixture of two or more kinds of the colorants, each of which having a particle size distribution of monodisperse, may be used.

Here, the average particle diameter of the pigment in the dispersion state indicates an average particle diameter of the pigment in the state in which the pigment is present in the ink, while the same conditions can be applied with respect to a so-called concentrated ink dispersion, which is the previous stage for preparing the dispersion into the form of the ink.

The average particle diameter of the pigment in the dispersion state and the average particle diameter and the particle size distribution of the polymer particles described below are determined by measuring a volume average particle diameter by a dynamic light scattering method using the Nanotrac particle size distribution measuring apparatus UPA-EX150 (trade name, manufactured by NIKKISO CO., LTD.).

The pigment may be used as one kind alone or in combination of two or more kinds thereof.

In a case where the ink of the invention contains the pigment, a content of the pigment in the ink is preferably from 1% by mass to 25% by mass, and more preferably from 2% by mass to 15% by mass, with respect to a total amount of the ink, from the viewpoint of the image density.

### <Water>

The ink of the invention contains water.

That is, the ink of the invention is a so-called aqueous ink.

As the water, it is preferable to use ion-exchanged water, distilled water, and the like which do not contain impurities.

A content of the water in the ink of the invention is not particularly limited. In embodiments, the content of the water is preferably from 10% by mass to 90% by mass, more preferably from 20% by mass to 90% by mass, further preferably from 30% by mass to 90% by mass, and particularly preferably from 40% by mass to 90% by mass, with respect to a total amount of the ink from the viewpoint of ensuring storage stability and jetting stability.

### <Water-soluble organic solvent>

The ink of the invention can contain at least one kind of water-soluble organic solvent.

Here, the water-soluble organic solvent indicates an organic solvent 1 g or more of which can dissolve 100 g of water at 25°C.

The water-soluble organic solvent is not particularly limited. For example, a conventionally-known water-soluble organic solvent described in paragraphs of 0130 to 0134 in JP-A No. 2013-82209 can be used.

Examples of the water-soluble organic solvent include 2-pyrrolidone, diethylene glycol, 2-methyl-1,3-propane diol, tetraethylene glycol, dipropylene glycol, tripropylene glycol, and tripropylene glycol monobutyl ether.

### <Other additives>

The ink of the invention can optionally include additives, in addition the components described above.

Examples of the additive include a conventionally-known additive such as an anti-fading agent, an emulsion stabilizer, a penetration enhancing agent, an ultraviolet absorber, a preservative, an antifungal agent, a pH modifier, a viscosity modifier, a dispersant, a dispersion stabilizer, an anticorrosive agent, a polymerization initiator, a solid wetting agent or a chelating agent. These various additives may be added directly to the ink after preparation of the ink or may be added during preparation of the ink.

As to other additives, description in paragraphs of 0088 to 0096 in JP-A No. 2010-65205 or description in paragraphs of 0083 to 0090 in JP-ANo. 2010-70669 can be appropriately referred.

### <Surface tension of ink>

The surface tension of the ink of the invention is not particularly limited. In embodiments, the surface tension is preferably from 20 mN/m to 40 mN/m, more preferably from 30 mN/m to 38 mN/m, and particularly preferably from 35 mN/m to 37 mN/m.

The surface tension of the ink indicates a value that is measured under the condition of the temperature of 25°C by a plate method using AUTOMATIC SURFACE TENSIOMETER CBVP-Z (trade name, manufactured by Kyowa Interface Science Co., Ltd.).

The surface tension of the ink can be adjusted by, for example, varying the kind or the amount of the surfactant.

### [Image recording method]

An image recording method of the invention includes an ink imparting step of imparting the inkjet ink composition onto a recording medium by jetting, from an inkjet head, droplets of the ink of the invention, in which the droplets respectively have a volume of from 10 pL to 120 pL. The image recording method of the invention may optionally include other steps.

According to the image recording method of the invention, it is possible to improve jetting stability of the ink and record the image that is excellent in scuff resistance and flexibility.

According to the image recording method of the invention, for example, it is possible to obtain an image-recorded material that has a high quality image with high productivity even the jetting of the ink is performed at a high frequency and with relatively large droplets while the recording medium is transported at higher speed than a speed used in the conventional art.

### <Recording medium>

In the image recording method of the invention, an image is recorded by jetting (imparting) the ink of the invention onto a recording medium.

The recording medium is not particularly limited, and a conventionally-known recording medium can be used as a support and a recording material.

Examples of a material of the recording medium include a paper, a glass, a metal (such as aluminum, zinc, copper, or the like), and a plastic (such as polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, or the like).

A shape of the recording medium is preferably sheet-shape (film-shape) or plate-shape.

Examples of the recording medium that has such shape include papers, glass plates, metal plates, plastic sheets (plastic films), papers to which plastics are laminated, papers to which metals are laminated or deposited, and plastic sheets (plastic films) to which metals are laminated or deposited.

In the invention, an effect of an improvement of scuff resistance of the image may be particularly effectively exhibited in a case where a non-absorbing or low-absorbing recording medium (for example, a recording medium made of plastic) is used as the recording medium.

Usually, in a case where an image is recorded on a non-absorbing or low-absorbing recording medium, scuff resistance of the recorded image easily deteriorates since an ink does not penetrate into the recording medium. However, according to the image forming method of the invention using the ink of the invention described above, it may be possible to suppress the deterioration of scuff resistance of the image even in a case where the image is recorded on a non-absorbing or low-absorbing recording medium.

Here, the "non-absorbing or low-absorbing recording medium" indicates a recording medium and having a 24-hour water absorption measured based on ASTM D570 of less than 0.5%.

In more detail, the "non-absorbing recording medium" indicates a recording medium which has the water absorption of less than 0.2%, and "the low-absorbing recording medium" indicates a recording medium which has the water absorption of 0.2% or more and less than 0.5%.

"%" shown as a unit of the water absorption is on a mass basis.

A thickness of the recording medium is preferably from 0.1 µm to 1,000 µm, more preferably from 0.1 µm to 800 µm, and further preferably from 1 µm to 500 µm.

When the thickness of the recording medium is in a range from 0.1 µm to 1,000 µm, since it becomes easier to bend and deform the recording medium, an effect of an improvement in flexibility of the image (follow-up performance of the image with respect to the bending and deforming of the recording medium) is more effectively exhibited.

When the recording medium is the non-absorbing or low-absorbing (that is, the 24-hour water absorption defined by ASTM D570 is less than 0.5%) recording medium with a thickness from 0.1 µm to 1,000 µm, an effect of an improvement of scuff resistance of the image and an improvement of flexibility of the image is more effectively exhibited.

As the recording medium, specifically, a recording medium made of plastic is preferable.

Examples of the plastic are as mentioned above. In embodiments, polypropylene, polyethylene, polyethylene terephthalate and polyvinyl chloride resin are preferable in terms of versatility.

Examples of the recording medium made of plastic include a plastic sheet (a plastic film), and specific examples thereof include a soft packing material for packaging a food product or the like, a panel for floor guide at a volume retailer, and the like.

The recording medium may have been subjected to a hydrophilization treatment. It is possible to suppress cissing the ink of the invention, which is an aqueous ink, by subjecting the recording medium to a hydrophilization treatment before the ink is imparted. The hydrophilization treatment may further improve scuff resistance of the image.

Examples of the hydrophilization treatment include a corona treatment, a plasma treatment, a flame treatment, a heat treatment, an abrasion treatment, a light irradiation treatment (a UV treatment), and a flame treatment, while the hydrophilization treatment is not limited thereto. For example, when a surface of the recording medium is subjected to the corona treatment in advance of the imparting of the ink to record the image, a surface energy of the recording medium increases, and thus wetting of the surface of the recording medium and the adhesion of the ink onto the recording medium are promoted. The corona treatment can be performed by using, for example, a Corona Master (manufactured by Shinko Electric & Instrumentation Co., Ltd., trade name: PS-10S) or the like. The conditions of the corona treatment may be appropriately selected depending on the situations such as the kind of recording mediums or the composition of the ink. For example, the conditions of the corona treatment may be set to the following treatment conditions.
- treatment voltage: 10 kV to 15.6 kV
- treatment speed: 30 mm/s to 100 mm/s

As the hydrophilization treatment in the invention, an embodiment in which the corona treatment is performed is preferable in term of cost and workability.

### <Ink jetting step>

The ink jetting step is a step of recording the image by jetting (imparting), from the inkjet head onto the recording medium, the ink of the invention at a droplet volume of isfrom 10 pL to 120 pL.

The inkjet head (head) is not particularly limited, and any known head can be used as long as the inkjet head is capable of jetting droplets which respectively have a volume of from 10 pL to 120 pL.

It is preferable that the jet surface (the nozzle surface) of the head be formed by the material that includes at least one kind selected from the group consisting of a metal and silicone from the viewpoint of more improving the durability of the head.

In a case where an aqueous ink is jetted from a head provided with the jet surface of the material described above, there is a tendency that misfiring easily occurs owing to stucking of the aqueous ink on the nozzle surface (the jet surface).

However, according to the ink and the image formation method of the invention, due to the action such as an increase in the viscosity of the ink, occurrence of misfiring may be suppressed and deterioration of jetting stability may be eventually suppressed even in a case of using a head provided with the jet surface of the material described above.

Examples of the material of the jet surface of the head include: a metal such as copper, silver, palladium, nickel or gold; an alloy such as a nickel/gold alloy, a stainless steel or a brass; a metal oxide such as titanium oxide; silicon; and a oxidation membrane of silicon (SiO2 film).

In the present step, a system of recording the image may be multi-pass or one-pass, while one-pass or two-pass is preferable from the viewpoint of high speed recording.

Here, "one-pass" means a system of recording in which all dots (ink droplets) to be formed in a scanning area in the direction are formed and recorded with one jetting, as to a direction intersecting with a transport direction of a recording medium (an array direction of a recording element). One-pass is also called a line system, in which a head (a line head in which a recording element is arrayed) which has a length corresponding to a recording medium width length is driven in a width direction of the recording medium, which direction intersecting with the transport direction of the recording medium transported when recoding, and plural jetting holes provided on the head simultaneously jet the ink in the array direction of the recording element. In one-pass, it is possible to perform recording of the image on the entire surface of the recoding medium by scanning the recording medium in the direction intersecting with the array direction of the recording element. Therefore, one-pass, in which a transport system such as a carriage is unnecessary, is different from a shuttle system, in which recording is performed by scanning a short serial head in a width direction of a recording medium.

In addition, "two-pass" is a system of recording in which dots to be formed in a scanning area is formed and recorded by jetting an ink twice.

In the ink jetting step, the droplets of the ink jetted from the head respectively have a volume of from 10 pL to 120 pL as described above.

The droplet volume of 10 pL or more may be advantageous in the point that high speed image recording can be performed, as described above. Furthermore, the droplet volume of 10 pL or more may enable to further ensure the area of the ink imparted onto the recording medium to be wider, therefore scuff resistance of the image may be further enhanced.

On the other hand, the droplet volume of 120 pL or less may enable to better perform drying of the ink imparted onto the recording medium, and in doing so, bleeding of the image can be further suppressed.

The droplet volume of the ink jetted from the head is preferably from 30 pL to 120 pL, more preferably from 60 pL to 120 pL, and particularly preferably from 70 pL to 110 pL.

In addition, the diameter of liquid droplets of the ink before impacting on the recording medium is preferably from 48 µm to 61 µm, and more preferably from 51 µm to 59 µm. Moreover, the diameter of liquid droplets of the ink can be directly measured by observing liquid droplets by using a high-speed camera (for example, HYPER VISION HPV-2A (trade name, manufactured by Shimazu Corporation)).

In the image recorded by the image recording method of the invention, the resolution for each color is preferably 100 dpi (dot per inch) or more, and more preferably 200 dpi or more, from the viewpoint of high image quality.

Examples of the inkjet head include SAPPHIRE QS 256/10, SAPPHIRE QS 256/30, SAPPHIRE QS 256/80, EMERALD QE256/30, EMERALD QE256/80, GALAXY 256/30, GALAXY 256/50, GALAXY 256/80, POLARIS 512/15, POLARIS 512/35, POLARIS 512/85 and SG-1024 (all are trade names, manufactured by FUJIFILM Dimatix, Inc.).

### <Light irradiating step>

A light irradiating step is a step of irradiating the ink imparted onto the recording medium with light.

The light irradiated in the light irradiating step is preferably an ultraviolet ray, which may be referred to as a "UV light" hereinafter.

The peak wavelength of the UV light is preferably from 200 nm to 405 nm, more preferably from 220 nm to 390 nm, further preferably from 220 nm to 350 nm, further preferably from 200 nm to 310 nm and particularly preferably from 200 nm to 280 nm.

Irradiation of the UV light may be performed so that the illuminance of exposure surface, for example, becomes from 10 mW/cm² to 2,000 mW/cm² and preferably from 20 mW/cm² to 1,000 mW/cm².

As a UV light source, a mercury lamp, a gas laser, a solid-state laser, and the like are mainly used, and a mercury lamp, a metal halide lamp and a UV fluorescent lamp are widely known. A replacement of any of these with a GaN-based semiconductor ultraviolet light emitting device may be very useful from industrial and environmental point of view, and an LED (UV-LED) and an LD (UV-LD), which have small in size, long-life, high efficiency and low cost, are expected as a UV light source.

In embodiments, a metal halide lamp, a high-pressure mercury lamp, a medium-pressure mercury lamp, a low-pressure mercury lamp or a UV-LED is preferable, a medium-pressure mercury lamp or a low-pressure mercury lamp is more preferable, and a low-pressure mercury lamp is particularly preferable as the UV light source.

In the light irradiating step, the light irradiation time can be set to a range of from 0.01 seconds to 120 seconds, and may be preferably from 0.1 seconds to 90 seconds.

The irradiation condition and the irradiation method disclosed in JP-A No. S60-132767 can be applied as the irradiation condition and the irradiation method for the invention in the same way. Specifically, a system in which a light source is provided at both sides of a head unit which includes an apparatus for jetting an ink and scanning is performed by the head unit and the light source by a so-called shuttle system or a system in which a light source which is apart from a head unit and non-driven is used for irradiation may be preferable.

The light irradiation is preferably performed after a certain period of time (for example, for 0.01 seconds to 120 seconds, preferably for 0.01 seconds to 60 seconds) passed from an impact of the ink on the recording medium and heat-drying of the ink.

### <Drying step>

The image recording method of the invention may include a drying step of drying the ink imparted onto the recording medium.

The drying step may enable to obtain an image that is excellent in scuff resistance and flexibility for a shorter period of time. Further, the drying step may enable to more effectively suppress wrinkles and curls in of the recording medium.

Further, in a case where the polymerizable group-containing particles include a polymer (for example, the specific polyurethane), when the drying is performed with heating, a fusing of the polymer by heat may be promoted, and thus an excellent membrane (image) may be formed. As a result thereof, scuff resistance of the image may be further improved. In a case where the image recording method of the invention includes the light irradiating step, the drying step may be preferably provided after the ink jetting step (ink imparting step) but before the light irradiating step.

A temperature employed for the drying (the drying temperature) may be preferably 20°C or higher.

Among those, the drying temperature may be preferably from 20°C to 150°C, and more preferably from 40°C to 80°C. The drying temperature of 80°C or lower may enable to more suppress the deformation of the recording medium by heating.

A time of drying can be appropriately selected with consideration of the ink composition, the recording speed, and the like.

A method of the drying is not particularly limited as long as it is a method which promotes volatilization of a liquid (at least water) contained in the ink.

Examples of the method of drying include a method of applying heat to the recording medium before and after recording, a method of blowing wind (including hot air) to the recording medium after recording, a method in combination thereof, and the like.

Specific examples of the method of drying include forced-air heating, radiation heating, conduction heating, high-frequency drying, microwave drying, and dried-air blowing.

In a case where the method of blowing hot air to the recording medium is employed, a preferable range of the temperature of the hot air is one that explained above for the drying temperature.

A wind speed of the hot air is preferably from 5 m/s to 30 m/s.

The drying in the present step may be particularly preferably performed by blowing hot air, at a wind speed of from 5 m/s to 30 m/s and a temperature of from 20°C to 80°C, onto the ink on the recording medium, in view of effectivelyachieving both the suppression of deformation of the recording medium and the efficiency of drying of the recording medium.

### [Image-recorded material]

The image-recorded material of the invention has the image recorded by the image recording method of the invention.

Since the image-recorded material of the invention has the image that has excellent scuff resistance and flexibility, the image-recorded material can be preferably used for a soft packing material for packaging a food product or the like, a panel for floor guide at a volume retailer, a handbag made of paper or made of plastic, and the like.

### EXAMPLES

The invention will be explained more specifically according to the invention by using Examples described below. However, the invention is by no means limited thereto, as long as the gist of the invention is retained. Unless otherwise indicated, "part" is based on mass.

### [Example 1]

### <Preparation of ink>

A magenta (M) ink was obtained by mixing the component of the following composition.

### -Composition-

- PROJET MAGENTA APD1000 (trade name, manufactured by FUJIFILM Imaging Colorants Ltd., magenta pigment dispersion liquid, pigment density: 14%) ... 28.57 parts by mass
- WBR-829 (trade name, an aqueous ultraviolet ray-curable urethane acrylate resin emulsion manufactured by Taisei Fine Chemical Co., Ltd.; 39% dispersion liquid of polyurethane particles that has an ethylenic double bond) ... 13.1 parts by mass
- PEG 8000 (trade name, polyethylene glycol manufactured by MP Biomedicals, LLC., Mn: 8,000) ... 6.1 parts by mass
- OLEFINE E1010 (trade name, a surfactant manufactured by Nissin Chemical Co., Ltd., HLB: 13 to 14) ... 1 part by mass
- Ion-exchanged water ... residue (part by mass) for setting the total amount of ink to 100 parts by mass

In Example 1, the water-soluble polymer (written as "water-soluble polymer (A)" in Table 1 describe below) is PEG 8000, and the polymerizable group-containing particles (written as "polymerizable group-containing particles (B)" in Table 1 describe below) are polyurethane particles that have an ethylenic double bond in WBR-829.

The content ratio [B/A] of the water-soluble polymer (A) and the polymerizable group-containing particles (B) is shown in Table 1 shown below.

### <Measurement and evaluation>

The obtained inks were subjected to the following measurements and evaluations.

The results are shown in Table 1.

### (Viscosity of ink)

The temperature of the ink was adjusted to 30°C, and the viscosity of the ink at the liquid temperature of 30°C was measured in the environment of the temperature of 30°C and the relative humidity of 50% by using a vibration type viscometer (trade name: DV-II+VISCOMETER, manufactured by Brookfield Engineering) and a cone plate (diameter: 35 mm).

In detail, an average value of a value (viscosity) measured in the condition of the torque of from 20% to 90% and the number of revolutions of from 0.5 rpm to 100 rpm under the measurement conditions described above was set to the viscosity of the ink in Example 1.

### (Storage stability of ink)

The viscosity of the ink was measured before and after leaving the ink at 60°C for one week. A storage stability of the ink was evaluated based on the obtained measured results according to the evaluation criterion described below.

The viscosity of the ink was measured in the same way as the above.

### -Evaluation criterion-

A: The difference between the viscosity measured before the leaving and the viscosity measured after the leaving is less than 0.3 mPa·s.
B: The difference between the viscosity measured before the leaving and the viscosity measured after the leaving is 0.3 mPa·s or more but less than 0.5 mPa·s, which is non-problematic in practical use.
C: The difference between the viscosity measured before the leaving and the viscosity measured after the leaving is 0.5 mPa·s or more but less than 0.8 mPa·s, which is concerned in practical use.
D: The difference between the viscosity measured before the leaving and the viscosity measured after the leaving is 0.8 mPa·s or more, which is problematic in practical use.

### (Continuous jetting property of ink)

The ink was continuously jetted from 256 ch of all nozzles of the POLARIS head (trade name, manufactured by FUJIFILM Dimatix Inc.) at the frequency of 10 kHz. In the continuous jetting, the droplet volume of the ink was set to 85 pL.

Then, a number of active nozzles capable of jetting without misfiring at 20 minutes after the starting of the continuous jetting was measured by strobe photography.

A ratio of the number of active nozzles to the number of all nozzles based on the measured results was determined, and a continuous jetting property of the ink was evaluated according to the evaluation criterion described below.

### -Evaluation criterion-

A: The ratio of the number of active nozzles to the number of all nozzles is 98% or more.
B: The ratio of the number of active nozzles to the number of all nozzles is 95% or more but less than 98%, which is non-problematic in practical use.
C: The ratio of the number of active nozzles to the number of all nozzles is 90% or more but less than 95%, which is concerned in practical use.
D: The ratio of the number of active nozzles to the number of all nozzles is less than 90%, which is problematic in practical use.

### (Intermittent jetting property of ink)

The ink was continuously jetted for 1 minute from 256 ch of all nozzles of a POLARIS head (trade name, manufactured by FUJIFILM Dimatix Inc.) at the frequency of 10 kHz. In the continuous jetting, the droplet volume of the ink was set to 85 pL.

After performing the 1 munite-continuous jetting of the ink, the jetting of the ink was stopped for a predetermined time.

Afterward, the continuous jetting was resumed in the same conditions described above, and a number of active nozzles capable of jetting without misfiring at 1 minute after the starting of the second continuous jetting was measured by strobe photography.

A ratio of the number of active nozzles to the number of all nozzles based on the measured results was determined, and an intermittent jetting property of the ink was evaluated according to the evaluation criterion described below.

### -Evaluation criterion-

A: The ratio of the number of active nozzles to the number of all nozzles is 98% or more.
B: The ratio of the number of active nozzles to the number of all nozzles is 95% or more but less than 98%, which is non-problematic in practical use.
C: The ratio of the number of active nozzles to the number of all nozzles is 90% or more but less than 95%, which is concerned in practical use.
D: The ratio of the number of active nozzles to the number of all nozzles is less than 90%, which is problematic in practical use.

### (Image quality)

The ink was continuously jetted, onto a high-quality paper to record a 100%-solid image (200×200 dpi, 60 cm (in parallel to printing direction) ×5 cm (in vertical to printing direction)) on the high-quality paper, in the same way as for the evaluation of the continuous jetting property.

The conditions of the transport speed and the frequency for the recording of the image were 30 m/minute (1 kHz), 50 m/minute (2 kHz), 100 m/minute (4 kHz), 150 m/minute (6 kHz), 200 m/minute (8 kHz) and 250 m/minute (10 kHz). In these conditions, an interval of the image was set to 60 seconds, and the recording of the image was repeated continuously 10 times.

The obtained image was visually observed to evaluate the image quality according to the evaluation criterion described below.

### -Evaluation criterion-

A: A density unevenness or a stripe is not noticeable on the whole image.
B: A density unevenness or a stripe is slightly observed on the whole image, which is non-problematic in practical use.
C: A density unevenness or a stripe is observed on the whole image, which is concerned in practical use.
D: A density unevenness or a stripe is observed on the whole image, which is problematic in practical use.

### (Scuff resistance of image)

A polypropylene sheet (manufactured by SEKISUI SEIKEI Co., Ltd., trade name: POLYSAME P-8134, thickness 200 µm) was prepared as a recording medium. A 24-hour water absorption of the polypropylene sheet was measured according ASTM D570 to find out it as being less than 0.2%.

The polypropylene sheet was subjected to a corona treatment twice in the conditions of a treatment voltage of 15 kV and a treatment speed of 50 mm/sec using a corona master (trade name: PS-10S, manufactured by Shinko Electric & Instrumentation Co., Ltd.).

Next, the ink was filled into an inkjet head (trade name: POLARIS PQ512/85, manufactured FUJIFILM Dimatix Inc.). Then, the ink was jetted from the head onto the polypropylene sheet at its surface side subjected to the corona treatment at a droplet volume of 85 pL to record a 100%-solid image of 200 dpi (dot per inch).

The obtained solid image was dried by blowing hot air at a wind speed of 7 m/s and a temperature of 40°C for 120 seconds using a dryer.

Next, using a low-pressure mercury lamp, a UV light was irradiated to the dried solid image in a condition to set the applied energy to 500 mJ/cm² so as to cure the solid image.

By the above way, an image sample was obtained.

The image part of the obtained image sample was rubbed back-and-forth a predetermined number of times with a white cotton wetted with 0.05 mL of water (area that is wetted: approximately 20 mm × approximately 20 mm) with applying a force of approximately 2 N to the image part using a Gakushin-type friction rubbing tester (trade name: No. 428, manufactured by Yasuda Seiki Seisakusho Ltd.). Then, a color that was transferred to the white cotton was visually observed to evaluate scuff resistance of the image according to the evaluation criterion described below.

### -Evaluation criterion-

A: Even the image part was subjected to 20 times of back-and-forth rubbing with the white cotton, the color-transfer to the white cotton was slight.
B: When the image part was subjected to 10 times of back-and-forth rubbing with the white cotton, the color-transfer to the white cotton was slightly observed, however, which is non-problematic in practical use.
C: When the image part was subjected to 10 times of back-and-forth rubbing with the white cotton, the color-transfer to the white cotton was observed, which is concerned in practical use.
D: When the image part was subjected to 2 times of back-and-forth rubbing with the white cotton, the color-transfer to the white cotton was prominently observed, which is problematic in practical use.

### (Flexibility of image)

A bending test was conducted as a testing method of evaluating flexibility of the image.

An image sample manufactured by the same method as that for forming the image sample used in the evaluation for scuff resistance of the image was used for the evaluation.

The image sample was folded so that the side of the surface on which the image was recorded be inside, and the folded image sample was pressed by putting a 200 g-weight (10cm×2cm×1cm) thereon for 10 seconds. Next, the folded portion of the image sample was folded again so that the side which is opposite to the side of the image-recorded surface be inside, and the folded image sample was pressed in the same manner as described above. This process was defined as one time of bending operation. The bending operation was repeated until the image was broken, and flexibility of the image was evaluated according to the evaluation criterion described below.

Whether the image was broken or not was confirmed by observing the bent portion using an optical microscope (trade name: VK-9700, manufactured by Keyence Corporation, magnification: an object of 10 times).

### -Evaluation criterion-

A: The number of times of the bending operation until the image is broken is 8 times or more.
B: The number of times of the bending operation until the image is broken is from 5 times to 7 times, which is non-problematic in practical use.
C: The number of times of the bending operation until the image is broken is from 2 times to 4 times, which is concerned in practical use.
D: The number of times of the bending operation until the image is broken is once, which is problematic in practical use.

### [Example 2]

Example 2 was prepared and evaluated in same manner as Example 1, except that OLFINE E1010 (1 part by mass) used in Example 1 was changed to a surfactant SURFYNOL 104PG-50 (0.41 parts by mass) (trade name, manufactured by Air Products and Chemicals Inc.)..

The results are shown in Table 1.

In Table 1, "SURFYNOL 104PG-50" is written as "SFN104".

The HLB of "SURFYNOL 104PG-50" is 4, as shown in Table 1.

### [Example 3]

Example 3 was prepared and evaluated in same manner as Example 2, except that WBR-829 (13.1 part by mass) used in Example 2 was changed to an aqueous ultraviolet ray-curable urethane acrylate resin emulsion (trade name: WBR-829D" (14.6 parts by mass), manufactured by Taisei Fine Chemical Co., Ltd.).

The results of the measurement and the evaluation are shown in Table 1.

"WBR-829D" is 35% dispersion liquid of polyurethane particles that have an ethylenic double bond.

### [Example 4]

Example 4 was prepared and evaluated in same manner as Example 3, except that PEG 8000 (6.1 part by mass) used in Example 3 was changed to PEG 2000 (11 parts by mass), and the amount of WBR-829D (described above) was changed from 14.6 parts by mass to 20 parts by mass.

The results of the measurement and the evaluation are shown in Table 1.

Here, PEG 2000 is polyethylene glycol (Mn: 2,000) manufactured by Wako Pure Chemical Industries, Ltd.

### [Example 5]

Example 5 was prepared and evaluated in same manner as Example 3, except that PEG 8000 (6.1 part by mass) used in Example 3 was changed to PEG 100000 (1.5 parts by mass).

The results of the measurement and the evaluation are shown in Table 1.

Here, PEG 100000 is polyethylene glycol (Mn: 100,000) manufactured by Wako Pure Chemical Industries, Ltd.

### [Example 6]

Example 6 was prepared and evaluated in same manner as Example 3, except that the amount of PEG 8000 was changed from 6.1 parts by mass to 5.3 parts by mass.

The results of the measurement and the evaluation are shown in Table 1.

### [Example 7]

Example 7 was prepared and evaluated in same manner as Example 3, except that the amount of PEG 8000 was changed from 6.1 parts by mass to 7.6 parts by mass.

The results of the measurement and the evaluation are shown in Table 1.

### [Example 8]

Example 8 was prepared and evaluated in same manner as 3, except that the amount of PEG 8000 was changed from 6.1 parts by mass to 3 parts by mass, and the amount of WBR-829D was changed from 14.6 parts by mass to 25 parts by mass.

The results of the measurement and the evaluation are shown in Table 1.

### [Example 9]

Example 9 was prepared and evaluated in same manner as Example 3, except that PEG 8000 (6.1 parts by mass) used in Example 3 was changed to PEG 4000 (9 parts by mass), and the amount of WBR-829D was changed from 14.6 parts by mass to 16 parts by mass.

The results of the measurement and the evaluation are shown in Table 1.

### [Example 10]

Example 10 was prepared and evaluated in same manner as Example 3, except that the amount of PEG 8000 was changed from 6.1 parts by mass to 6.55 parts by mass.

The results of the measurement and the evaluation are shown in Table 1.

### [Example 11]

Example 11 was prepared and evaluated in same manner as Example 3, except that the amount of WBR-829D was changed from 14.6 parts by mass to 17.5 parts by mass.

The results of the measurement and the evaluation are shown in Table 1.

### [Example 12]

Example 12 was prepared and evaluated in same manner as Example 3, except that PEG 8000 (6.1 parts by mass) used in Example 3 was changed to PEG 20000 (3.8 parts by mass), and the amount of WBR-829D was changed from 14.6 parts by mass to 8.6 parts by mass.

The results of the measurement and the evaluation are shown in Table 1.

### [Example 13]

Example 13 was prepared and evaluated in same manner as Example 3, except that PEG 8000 (6.1 parts by mass) used in Example 3 was changed to PE-108 (3.1 parts by mass), and the amount of WBR-829D was changed from 14.6 parts by mass to 8.6 parts by mass.

The results of the measurement and the evaluation are shown in Table 1.

Here, "PE-108" is polyoxyethylene glycol/polyoxypropylene glycol copolymer manufactured by Sanyo Chemical Industries, Ltd. (trade name: NEWPOL PE-108, Mn: 16,500, molar ratio [PEG/PPG]: 300/55)

### [Comparative Example 1]

Comparative Example 1 was prepared and evaluated in same manner as Example 3, except that PEG 8000 (6.1 parts by mass) used in Example 3 was changed to PEG 600 (13 parts by mass).

The results of the measurement and the evaluation are shown in Table 1.

Here, PEG 600 is polyethylene glycol (Mn: 600) manufactured by Wako Pure Chemical Industries, Ltd.

### [Comparative Example 2]

Comparative Example 2 was prepared and evaluated in same manner as as Example 3, except that PEG 8000 (6.1 parts by mass) and WBR-829D (14.6 parts by mass) used in Example 3were changed to PEG 100000 (1.5 parts by mass) and WBR-829D (19.2 parts by mass), respectively.

The results of the measurement and the evaluation are shown in Table 1.

### [Comparative Example 3]

Comparative Example 3 was prepared and evaluated in same manner as Example 3, except that the amount of PEG 8000 was changed from 6.1 parts by mass to 5.0 parts by mass.

The results of the measurement and the evaluation are shown in Table 1.

### [Comparative Example 4]

Comparative Example 4 was prepared and evaluated in same manner as Example 3, except that the amount of PEG 8000 was changed from 6.1 parts by mass to 8.5 parts by mass.

The results of the measurement and the evaluation are shown in Table 1.

### [Comparative Example 5]

Comparative Example 5 was prepared and evaluated in same manner as Example 1, except that PEG 8000 used in Example 1 was omitted.

The results of the measurement and the evaluation are shown in Table 1.

### [Comparative Example 6]

Comparative Example 6 was prepared and evaluated in same manner as Example 1, except that WBR-829 used in Example 1 was omitted.

The results of the measurement and the evaluation are shown in Table 1.

**Table 1**

| | Water-soluble polymer (A) | Dispersion liquid of polymerizable group-containing particles (B) | B/A (Content ratio) | Surfactant | Viscosity (mPa·s) | Storage stability | Continuous jetting property | Intermittent jetting property | Image quality | Scuff resistance | Flexibility |
|---|---|---|---|---|---|---|---|---|---|---|---|
| Example 1 | PEG 8000 | WBR-829 | 0.84 | E1010 (HLB: 13 -14)) | 12.55 | A | B | B | B | A | A |
| Example 2 | PEG 8000 | WBR-829 | 0.84 | SFN104 (HLB: 4) | 12.21 | A | A | A | A | A | A |
| Example 3 | PEG 8000 | WBR-829D | 0.84 | SFN104 (HLB: 4) | 12.13 | A | A | A | A | A | A |
| Example 4 | PEG 2000 | WBR-829D | 0.64 | SFN104 (HLB: 4) | 11.86 | B | B | B | B | B | B |
| Example 5 | PEG 100000 | WBR-829D | 3.41 | SFN104 (HLB: 4) | 12.33 | B | B | B | B | B | B |
| Example 6 | PEG 8000 | WBR-829D | 0.96 | SFN104 (HLB: 4) | 10.33 | A | A | A | A | A | A |
| Example 7 | PEG 8000 | WBR-829D | 0.67 | SFN104 (HLB: 4) | 13.88 | A | A | A | A | A | A |
| Example 8 | PEG 8000 | WBR-829D | 2.92 | SFN104 (HLB: 4) | 10.36 | A | A | A | A | A | A |
| Example 9 | PEG 4000 | WBR-829D | 0.62 | SFN104 (HLB: 4) | 13.42 | A | A | A | A | A | A |
| Example 10 | PEG 8000 | WBR-829D | 0.78 | SFN104 (HLB: 4) | 13.35 | A | A | A | A | A | A |
| Example 11 | PEG 8000 | WBR-829D | 1.00 | SFN104 (HLB: 4) | 13.42 | A | A | A | A | A | A |
| Example 12 | PEG 20000 | WBR-829D | 0.79 | SFN104 (HLB: 4) | 11.96 | A | A | A | A | A | A |
| Example 13 | PE-108 | WBR-829D | 0.97 | SFN104 (HLB: 4) | 12.36 | A | A | A | A | A | A |
| Comparative Example 1 | PEG 600 | WBR-829D | 0.39 | SFN104 (HLB: 4) | 12.12 | C | C | C | C | D | C |
| Comparative Example 2 | PEG 100000 | WBR-829D | 4.48 | SFN104 (HLB: 4) | 13.50 | C | C | C | C | B | C |
| Comparative Example 3 | PEG 8000 | WBR-829D | 1.02 | SFN104 (HLB: 4) | 9.20 | B | C | C | C | B | B |
| Comparative Example 4 | PEG 8000 | WBR-829D | 0.60 | SFN104 (HLB: 4) | 15.00 | B | C | C | C | B | B |
| Comparative Example 5 | None | WBR-829 | - | E1010 (HLB: 13 -14) | 6.90 | C | D | D | D | B | D |
| Comparative Example 6 | PEG 8000 | None | - | E1010 (HLB: 13 -14) | 11.78 | B | A | A | A | D | C |

As shown in Table 1, jetting stability of the ink (the continuous jetting property and the intermittent jetting property), scuff resistance of the image and flexibility of the image were excellent in Examples 1 to 13, which uses the ink that containing the water-soluble polymer (A) and the polymerizable group-containing particles (B), in which the Mn of the water-soluble polymer (A) is 1,000 or more, the content ratio [B/A] is from 0.6 to 3.5, and the viscosity of the ink is from 10 mPa·s to 14 mPa·s.

On the other hand, Comparative Example 1, in which the Mn of the water-soluble polymer (A) is set to less than 1,000 and the content ratio [B/A] is set to less than 0.6, was inferior in the jetting stability of the ink, the scuff resistance of the image and the flexibility of the image (in particular, the scuff resistance of the image).

Comparative Example 2, in which the content ratio [B/A] exceeds 3.5, was inferior in flexibility of the image deteriorated and jetting stability of the ink.

Both Comparative Example 3, in which the viscosity is less than 10 mPa·s, and Comparative Example 4, in which the viscosity exceeds 14 mPa·s, were inferior in jetting stability of ink.

Comparative Example 5, in which the water-soluble polymer (A) is not used and the viscosity is less than 10 mPa·s, was inferior in jetting stability of the ink and flexibility of the image.

Comparative Example 6, in which the polymerizable group-containing particles (B) was not used, was inferior in scuff resistance of the image and flexibility of the image (in particular, scuff resistance of the image).

Exemplary embodiments of the invention include, but not limited to, the following.
<1> An inkjet ink composition, comprising;
   a water-soluble polymer which comprises at least one selected from the group consisting of polyethylene glycol and a copolymer of ethylene glycol and propylene glycol that has a number average molecular weight of 1,000 or more;
   particles that have a polymerizable group;
   a colorant; and
   water,
   a ratio of a content of the particles to a content of the water-soluble polymer in terms of mass being from 0.6 to 3.5, and a viscosity of the inkjet ink composition at 30°C being from 10 mPa·s to 14 mPa·s.
<2> The inkjet ink composition according to <1>, wherein the particles comprise polyurethane that has an ethylenic double bond.
<3> The inkjet ink composition according to <1> or <2>, further comprising a surfactant having a Hydrophile-Lipophile Balance of from 3 to 12.
<4> The inkjet ink composition according to any one of <1> to <3>, wherein the content of the water-soluble polymer is from 1% by mass to 16% by mass with respect to a total amount of the inkjet ink composition.
<5> The inkjet ink composition according to any one of <1> to <4>, wherein the number average molecular weight of the water-soluble polymer is from 1,000 to 100,000.
<6> The inkjet ink composition according to any one of <1> to <5>, wherein the number average molecular weight of the water-soluble polymer is from 4,000 to 20,000.
<7> An image recording method, comprising imparting the inkjet ink composition according to any one of <1> to <6> onto a recording medium by jetting, from an inkjet head, the inkjet ink composition at a droplet volume of from 10 pL to 120 pL.
<8> The image recording method according to <7>, wherein the recording medium has a thickness of from 0.1 µm to 1,000 µm and a 24-hour water absorption defined by ASTM D570 of less than 0.5%.
<9> The image recording method according to <7> or <8>, wherein the recording medium is made of plastic.
<10> The image recording method according to any one of <7> to <9>, wherein a jet surface of the inkjet head comprises at least one selected from the group consisting of a metal and silicon.
<11> The image recording method according to any one of <7> to <10>, further comprising irradiating, with light, the inkjet ink composition imparted onto the recording medium.
<12> The image recording method according to <11>, further comprising drying the inkjet ink composition imparted onto the recording medium, wherein the drying is performed after the ink imparting, but before the light irradiating.
<13> The image recording method according to <12>, wherein the drying is performed by blowing hot air, at a wind speed of from 5 m/s to 30 m/s and a temperature of from 20°C to 80°C, onto the inkjet ink composition imparted onto the recording medium.
<14> An image-recorded material, comprising an image recorded, on a recording medium, by the image recording method according to any one of <7> to <13>.

All publications, patent applications, and technical standards mentioned in this specification are herein incorporated by reference to the same extent as if such individual publication, patent application, or technical standard was specifically and individually indicated to be incorporated by reference. It will be obvious to those having skill in the art that many changes may be made in the above-described details of the preferable embodiments of the invention. It is intended that the scope of the invention be defined by the following claims and their equivalents.

## Claims

1. An inkjet ink composition, comprising:
a water-soluble polymer which comprises at least one selected from the group consisting of polyethylene glycol and a copolymer of ethylene glycol and propylene glycol that has a number average molecular weight, measured by gel permeation chromatography of 1,000 or more;
particles that have a polymerizable group;
a colorant; and
water,
a ratio of a content of the particles to a content of the water-soluble polymer in terms of mass being from 0.6 to 3.5, and a viscosity measured at a relative humidity of 50% using a vibration type viscometer and a cone plate (35 mm in diameter) of the inkjet ink composition at 30°C being from 10 mPa·s to 14 mPa·s.

2. The inkjet ink composition according to claim 1, wherein the particles comprise polyurethane that has an ethylenic double bond.

3. The inkjet ink composition according to claim 1 or claim 2, further comprising a surfactant having a Hydrophile-Lipophile Balance of from 3 to 12.

4. The inkjet ink composition according to any one of claims 1 to 3, wherein the content of the water-soluble polymer is from 1% by mass to 16% by mass with respect to a total amount of the inkjet ink composition.

5. The inkjet ink composition according to any one of claims 1 to 4, wherein the number average molecular weight of the water-soluble polymer measured by gel permeation chromatography is from 1,000 to 100,000.

6. The inkjet ink composition according to any one of claims 1 to 5, wherein the number average molecular weight measured by gel permeation chromatography of the water-soluble polymer is from 4,000 to 20,000.

7. An image recording method, comprising imparting the inkjet ink composition according to any one of claims 1 to 6 onto a recording medium by jetting, from an inkjet head, the inkjet ink composition at a droplet volume of from 10 pL to 120 pL.

8. The image recording method according to claim 7, wherein the recording medium has a thickness of from 0.1 µm to 1,000 µm and a 24-hour water absorption defined by ASTM D570 of less than 0.5%.

9. The image recording method according to claim 7 or claim 8, wherein the recording medium is made of plastic.

10. The image recording method according to any one of claims 7 to 9, wherein a jet surface of the inkjet head comprises at least one selected from the group consisting of a metal and silicon.

11. The image recording method according to any one of claims 7 to 10, further comprising irradiating, with light, the inkjet ink composition imparted onto the recording medium.

12. The image recording method according to claim 11, further comprising drying the inkjet ink composition imparted onto the recording medium, wherein the drying is performed after the ink imparting, but before the light irradiating.

13. The image recording method according to claim 12, wherein the drying is performed by blowing hot air, at a wind speed of from 5 m/s to 30 m/s and a temperature of from 20°C to 80°C, onto the inkjet ink composition imparted onto the recording medium.

14. An image-recorded material, comprising an image recorded, on a recording medium, by the image recording method according to any one of claims 7 to 13.

## Patentansprüche

1. Tintenstrahl-Tintenzusammensetzung, enthaltend:
ein wasserlösliches Polymer, das mindestens eines, ausgewählt aus der Gruppe bestehend aus Polyethylenglykol und einem Copolymer aus Ethylenglykol und Propylenglykol, das ein durch Gelpermeationschromatographie gemessenes zahlengemitteltes Molekulargewicht von 1000 oder mehr aufweist, umfasst;
Partikel, die eine polymerisierbare Gruppe aufweisen;
ein Farbmittel; und
Wasser, wobei
ein Verhältnis eines Gehalts an den Partikeln zu einem Gehalt des wasserlöslichen Polymers, bezogen auf die Masse, von 0,6 bis 3,5 beträgt, und eine bei einer relativen Feuchtigkeit von 50% unter Verwendung eines Vibrations-Typ-Viskosimeters und einer Kegel Platte (35 mm im Durchmesser) gemessene Viskosität der Tintenstrahl-Tintenzusammensetzung bei 30°C von 10 mPa·s bis 14 mPa·s beträgt.

2. Tintenstrahl-Tintenzusammensetzung nach Anspruch 1, wobei die Partikel Polyurethan, das eine ethylenische Doppelbindung aufweist, enthalten.

3. Tintenstrahl-Tintenzusammensetzung nach Anspruch 1 oder 2, ferner enthaltend ein Tensid, das eine Hydrophile-Lipophile Balance von 3 bis 12 aufweist.

4. Tintenstrahl-Tintenzusammensetzung nach einem der Ansprüche 1 bis 3, wobei der Gehalt an dem wasserlöslichen Polymer von 1 Masse% bis 16 Masse%, bezogen auf eine Gesamtmenge der Tintenstrahl-Tintenzusammensetzung, beträgt.

5. Tintenstrahl-Tintenzusammensetzung nach einem der Ansprüche 1 bis 4, wobei das durch Gelpermeationschromatographie gemessene zahlengemittelte Molekulargewicht des wasserlöslichen Polymers von 1000 bis 100000 beträgt.

6. Tintenstrahl-Tintenzusammensetzung nach einem der Ansprüche 1 bis 5, wobei das durch Gelpermeationschromatographie gemessene zahlengemittelte Molekulargewicht des wasserlöslichen Polymers von 4000 bis 20000 beträgt.

7. Bildaufzeichnungsverfahren, umfassend ein Übermitteln der Tintenstrahl-Tintenzusammensetzung nach einem der Ansprüche 1 bis 6 auf ein Aufzeichnungsmedium durch Ausstoßen der Tintenstrahl-Tintenzusammensetzung aus einem Tintenstrahlkopf mit einem Tropfenvolumen von 10 pL bis 120 pL.

8. Bildaufzeichnungsverfahren nach Anspruch 7, wobei das Aufzeichnungsmedium eine Dicke von 0,1 µm bis 1000 µm und eine durch ASTM D570 definierte 24-Stunden Wasserabsorption von weniger als 0,5% aufweist.

9. Bildaufzeichnungsverfahren nach Anspruch 7 oder 8, wobei das Aufzeichnungsmedium aus Plastik gebildet ist.

10. Bildaufzeichnungsverfahren nach einem der Ansprüche 7 bis 9, wobei eine Ausstoßoberfläche des Tintenstrahlkopfes mindestens eines, ausgewählt aus der Gruppe bestehend aus einem Metall und Silizium, umfasst.

11. Bildaufzeichnungsverfahren nach einem der Ansprüche 7 bis 10, ferner umfassend ein Bestrahlen der auf das Aufzeichnungsmedium übermittelten Tintenstrahl-Tintenzusammensetzung mit Licht.

12. Bildaufzeichnungsverfahren nach Anspruch 11, ferner umfassend ein Trocknen der auf das Aufzeichnungsmedium übermittelten Tintenstrahl-Tintenzusammensetzung, wobei das Trocknen nach dem Übermitteln der Tinte aber vor dem Bestrahlen mit Licht ausgeführt wird.

13. Bildaufzeichnungsverfahren nach Anspruch 12, wobei das Trocknen durch Blasen von heißer Luft mit einer Windgeschwindigkeit von 5 m/s bis 30 m/s und einer Temperatur von 20°C bis 80°C, auf die auf das Aufzeichnungsmedium übermittelte Tintenstrahl-Tintenzusammensetzung ausgeführt wird.

14. Aufgezeichnetes Bildmaterial, umfassend ein auf ein Aufzeichnungsmedium durch das Bildaufzeichnungsverfahren nach einem der Ansprüche 7 bis 13 aufgenommenes Bild.

## Revendications

1. Composition d'encre pour jet d'encre, comprenant :
un polymère soluble dans l'eau, lequel comprend au moins un élément sélectionné parmi le groupe consistant en un polyéthylène glycol et un copolymère d'éthylène glycol et de propylène glycol, qui présente un poids moléculaire moyen en nombre, mesuré par chromatographie sur gel perméable, supérieur ou égal à 1000 ;
des particules présentant un groupe polymérisable ;
un colorant, et
de l'eau ;
un rapport d'une teneur des particules à une teneur du polymère soluble dans l'eau en termes de masse allant de 0,6 à 3,5, et une viscosité mesurée à une humidité relative de 50 % à l'aide d'un viscosimètre de type à vibrations et d'un plan-cône (35 mm de diamètre) de la composition d'encre pour jet d'encre à 30 °C allant de 10 mPa·s à 14 mPa·s.

2. Composition d'encre pour jet d'encre selon la revendication 1, dans laquelle les particules comprennent du polyuréthane présentant une double liaison éthylénique.

3. Composition d'encre pour jet d'encre selon la revendication 1 ou 2, comprenant en outre un tensioactif présentant une balance hydrophile-lipophile allant de 3 à 12.

4. Composition d'encre pour jet d'encre selon l'une quelconque des revendications 1 à 3, dans laquelle la teneur du polymère soluble dans l'eau est comprise entre 1 % en masse et 16 % en masse par rapport à une quantité totale de la composition d'encre pour jet d'encre.

5. Composition d'encre pour jet d'encre selon l'une quelconque des revendications 1 à 4, dans laquelle le poids moléculaire moyen en nombre du polymère soluble dans l'eau, mesuré par chromatographie sur gel perméable, est compris entre 1000 et 100 000.

6. Composition d'encre pour jet d'encre selon l'une quelconque des revendications 1 à 5, dans laquelle le poids moléculaire moyen en nombre du polymère soluble dans l'eau, mesuré par chromatographie sur gel perméable, est compris entre 4000 et 20 000.

7. Procédé d'enregistrement d'image, comprenant l'application de la composition d'encre pour jet d'encre selon l'une quelconque des revendications 1 à 6 sur un support d'enregistrement par jet, à partir d'une tête à jet d'encre, de la composition d'encre pour jet d'encre avec un volume de gouttelettes allant de 10 pL à 120 pL.

8. Procédé d'enregistrement d'image selon la revendication 7, dans lequel le support d'enregistrement présente une épaisseur allant de 0,1 µm à 1000 µm et une absorption d'eau sur 24 heures définie par la norme ASTM D570 inférieure à 0,5 %.

9. Procédé d'enregistrement d'image selon la revendication 7 ou 8, dans lequel le support d'enregistrement est fabriqué en plastique.

10. Procédé d'enregistrement d'image selon l'une quelconque des revendications 7 à 9, dans lequel une surface de jet de la tête à jet d'encre comprend au moins un élément sélectionné parmi le groupe consistant en un métal et du silicium.

11. Procédé d'enregistrement d'image selon l'une quelconque des revendications 7 à 10, comprenant en outre l'irradiation, avec une lumière, de la composition d'encre pour jet d'encre appliquée sur le support d'enregistrement.

12. Procédé d'enregistrement d'image selon la revendication 11, comprenant en outre le séchage de la composition d'encre pour jet d'encre appliquée sur le support d'enregistrement, dans lequel le séchage est réalisé après application de l'encre, mais avant irradiation avec la lumière.

13. Procédé d'enregistrement d'image selon la revendication 12, dans lequel le séchage est réalisé en soufflant de l'air chaud, avec une vitesse de souffle allant de 5 m/s à 30 m/s et une température allant de 20 °C à 80 °C, sur la composition d'encre pour jet d'encre appliquée sur le support d'enregistrement.

14. Matériau d'image enregistrée, comprenant une image enregistrée, sur un support d'enregistrement, par le procédé d'enregistrement d'image selon l'une quelconque des revendications 7 à 13.
